# EUROPEAN PATENT APPLICATION

(11) **EP 1 847 514 A1**
(43) Date of publication of application: **24.10.2007**
(21) Application number: 05807087.1
(22) Date of filing: 18.11.2005
(51) Int. Cl.: C03B 37/018, C03B 37/014

(54) **OPTICAL FIBER BASE MATERIAL AND METHOD FOR PRODUCTION THEREOF**

(30) Priority: 13.01.2005 JP 2005006421
(71) Applicant: Shin-Etsu Chemical Company, Ltd., Tokyo 100-0004 (JP)
(72) Inventor: ABE, Jun, c/o Shin-Etsu Chemical Co., Ltd.,, Usui-gun, Gunma 3790224 (JP); MANTOKU, Nobuyasu, c/o Shin-Etsu Chemical Co. Ltd., Usui-gun, Gunma 3790224 (JP); SAITOH, Fumio, c/o Shin-Etsu Chemical Co., Ltd.,, Usui-gun, Gunma 3790224 (JP)
(74) Representative: Pfenning, Meinig & Partner GbR
(86) International application number: PCT/JP2005/021232
(87) International publication number: WO 2006/075448

(57) **Abstract**

There is provided a method for manufacturing an optical fiber base material. The method includes: connecting a dummy rod 3 to an end of a target formed of a quartz glass rod to form a rod with dummy, the target becoming the optical fiber base material by depositing thereon glass particles; forming a taper portion 10 of which a diameter of the dummy rod side is narrower than a diameter of the target side in a connecting portion between the dummy road being chucked and the target 5 when processing the rod with dummy to transparently vitrify it; and depositing glass particles on an outer circumference of the glass rod with dummy after the processing the dummy rod so as to cover the outer circumference of a large diameter side of the taper portion 10 and forming soot.

## Description

### TECHNICAL FIELD

The present invention relates to an optical fiber base material and a manufacturing method therefor. More particularly, the present invention relates to an optical fiber base material made by depositing glass particles on a quartz glass rod to form a porous base material and transparently vitrifying the porous base material and a manufacturing method therefor.

The present application also relates to the following application, the contents of which are incorporated herein by reference if applicable.
A Japanese Patent Application No. 2005-006421 Filed on January 13, 2005.

### BACKGROUND ART

There have been conventionally proposed various methods for manufacturing an optical fiber base material. In these methods, an outside vapor depositionmethod (anOVDmethod) is generally used because an optical fiber base material with a large diameter can be mass-produced. The OVD method is a method for relatively reciprocating a burner or a starting member along the rotating starting member, attaching and depositing glass particles generated in a burner flame on the starting member, manufacturing soot, and dehydrating and sintering the soot within an electric furnace to transparently vitrify it. In addition, as a starting member for depositing soot, there is used a member obtained by connecting a dummy rod (a supporting member) to both ends of a quartz glass rod (referred to as a target) corresponding to a core.

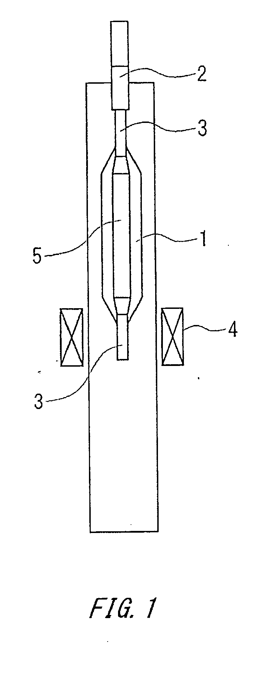

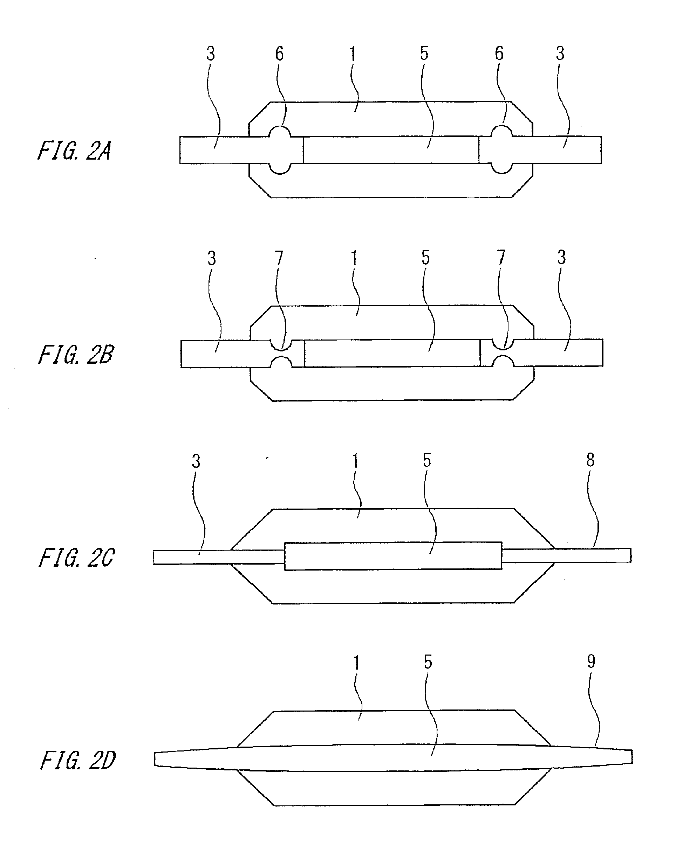

For example, the synthesized soot 1 is hung on a gripping mechanism section 2 via a dummy rod 3 and passes through a heating zone by heaters 4 while rotating by means of, e.g., an apparatus as shown in FIG. 1, and thus is sintered and transparently vitrified. In addition, a reference number 5 is a target. Since soot has a small bulk density, the soot largely shrinks in a diametrical direction and an axial direction thereof during sintering and transparently vitrifying the soot. Both ends of the soot forms a conical shape shrinks during the synthesis and during sintering after that.

Conventionally, for optical fiber base materials manufactured in various methods, adjustment for a refractive index distribution has been performed by doping various types of dopants. For example, germanium and fluorine are quoted as a dopant. An optical fiber base material used for manufacturing a fluorine-doped fiber is sintered and transparently vitrified in a fluorine-containing gas atmosphere, and thus fluorine is doped in a cladding layer. Fluorine doping should be uniformly performed in the cladding layer, but it becomes difficult to uniformly perform doping if bulk density of soot is high.

It is preferable that the bulk density is less or equal to 0.5g/cm³ in order to perform to uniformly perform fluorine doping. However, if bulk density is small, a portion with a conical shape is easy to display cracks during sintering and transparently vitrifying soot as a shrinkage ratio is large. Furthermore, if bulk density is small, deviance is produced on an interface between the soot and the target during shrinking the soot, inotherwords, it is easy to produce imperfect alignment, and thus it is easy to generate bubbles (simply referred to as spiral-shape bubbles) ranged in a spiral shape and a stripe shape along an axial direction on an interface between the soot and the target.

Here, as shown in FIGs. 2A to 2D, Patent Document 1 discloses a method for restraining the shrinkage of soot in an axial direction by increasing frictional resistance in shrinking, by means of (a) providing a convex part 6 on a dummy rod 3, (b) providing a concave portion 7 on the dummy rod 3, (c) reducing a diameter of the dummy rod 3 to be a narrow diameter portion 8 smaller than a target diameter, or (d) gradually reducing the diameter of both ends of the target 5 to provide a diameter-reduced portion 9.
[Patent Document 1] Japanese Patent Application Publication No. 1994-48757

### DISCLOSURE OF THE INVENTION

### PROBLEMS TO BE SOLVED BY THE INVENTION

However, unevenness processing on the dummy rod 3 of the above (a) and (b) has a newly added machining cost, and thus an overall cost becomes high. In the method for proving a diameter difference between the dummy rod 3 and the target 5 in (c), an effect restraining the shrinkage in an axial direction and an effect restraining the generation of a spiral-shape bubble produced on the interface between the soot and the target 5 are small if the difference between diameters is small. On the other hand, if the difference between diameters is large, a defective is frequently generated when soot density is low in depositing, but it is effective to restrain the generation of a spiral-shape bubble. Moreover, in the method for gradually reducing the diameter of both ends of the target 5 to process the target in the shape of a taper in (d), an effective length of the target 5 is shortened and thus the length of a finally manufactured optical fiber is only substantially one-half of that of the target. Therefore, there is a problem on the cost front.

The present invention has been achieved in view of the situation above, and the object is to realize an optical fiber base material made by restraining the generation of spiral-shape bubbles caused by imperfect alignment in the interface and a manufacturing method therefor.

### MEANS FOR SOLVING THE PROBLEMS

To solve this problem, according to the first aspect of the present invention, there is provided a method for manufacturing an optical fiber base material. The method includes: connecting a dummy rod to an end of a target formed of a quartz glass rod to form a rod with dummy, the target becoming the optical fiber base material by depositing thereon glass particles; processing the dummy rod to form a taper portion that becomes narrow in a connecting portion between the dummy road and the target as a diameter of the dummy rod departs from the target; and depositing glass particles on an outer circumference of the glass rod with dummy after the processing the dummy rod so as to cover the outer circumference of a large diameter side of the taper portion and forming soot. According to this, although a transparently-vitrifying process is performed on soot having a large shrinkage ratio due to a low bulk density, it is hard to show cracks. Moreover, the generation of spiral-shape bubbles by imperfect alignment in an interface between the soot and the target is restrained. Therefore, it is possible to improve a manufacturing yield of an optical fiber base material having a high optical characteristic. In addition, these special features and action-effect are particularly valid when a depositing process is performed using an outside vapor deposition method.

Moreover, according to one embodiment, in the manufacturing method, an angle of inclination of the taper portion may be 2 to 50 degrees. According to this, the generation of imperfect alignment is restrained because glass particles are shrunk in a state that the particles are moored at the taper portion in a transparently-vitrifying process. In addition, if a taper angle θ of the taper portion exceeds 50 degrees, it is easy to display cracks in soot. On the other hand, if the taper angle θ is less than 2 degrees, a meaningful effect was not obtained.

Moreover, according to one embodiment, in the manufacturing method, a length of the taper portion may be 3 to 50mm. According to this, it is possible to effectively show the effect without causing the rise of manufacturing cost. In addition, if the length of the taper portion exceeds 50mm, productivity decreases because a processing amount necessary for forming a valid taper angle becomes large. On the other hand, if the length of the taper portion is shorter than 3mm, a meaningful effect did not appear. Moreover, when processing the target side to form the base material, a cost increases because an effective portion be coming a product in the target is relatively shortened.

Moreover, according to one embodiment, in the manufacturing method, a bulk density of the soot may be not more than 0.5g/cm³. According to this, an optical fiber base material in which elements included in an atmosphere are uniformly doped can be manufactured by appropriately selecting an atmosphere for a transparently-vitrifying process.

Moreover, according to one embodiment, in the manufacturing method, the optical fiber base material may be a fluorine-doped opticalfiberbase material. According to this, it is possible to manufacture an optical fiber including a clad with a low refractive index and having high resistance to radiation.

Furthermore, according to the second aspect of the present invention, there is provided an optical fiber base material manufactured by the manufacturing method. According to this, it is possible to manufacture an optical fiber at a high yield by means of a high-quality optical fiber base material at a low price. Moreover, since added substances can be uniformly doped in the optical fiber base material, productivity of an optical fiber with a predominant optical characteristic is improved.

Moreover, according to one embodiment, in the manufacturing method, the optical fiber base material may be afluorine-doped optical fiber base material. According to this, it is possible to manufacture an optical fiber including a clad with a low refractive index and having high resistance to radiation.

### EFFECTS OF THE INVENTION

As described above, according to the above configuration, since the generation of spiral-shape bubbles in the interface between the soot and the target can be restrained, a manufacturing cost can be largely reduced and an optical fiber base material with a predominant optical characteristic can be obtained.

The summary of the invention does not necessarily describe all necessary features of the present invention. The present invention may also be a sub-combination of the features described above.

### BRIEF DESCRIPTION OF THE DRAWINGS

FIG. 1 is a schematic view showing an outline of an apparatus for transparently vitrifying soot.
FIGs . 2A to 2D are schematic diagrams explaining a shape of a rod with dummy and a target by a conventional art.
FIG. 3 is a graph showing a preferable shape of a taper portion.
FIG. 4 is a schematic diagram explaining a shape of a taper portion according to the present invention.

### BEST MODE FOR CARRYING OUT THE INVENTION

The invention will now be described based on the preferred embodiments, which do not intend to limit the scope of the present invention, but exemplify the invention. All of the features and the combinations thereof described in the embodiment are not necessarily essential to the invention.

The present invention relates to a method for restraining the generation of spiral-shape bubbles in an interface between soot and target by prescribing a shape of an end of a dummy rod connected to the target, and specifically a method for forming a dummy rod and a target so that a diameter of the dummy rod being chucked is narrower than a diameter of the target atthetimeoftransparently-vitrifying and forming a taper portion in a connected portion between the dummy rod and the target, depositing glass particles on the target to also cover the taper portion, and forming soot.

Since a shape of a taper portion in a connected portion is important in the present invention, relation between the shape of taper portion and imperfect alignment was investigated for taper portions of various shapes. Specifically, targets with diameters of 40, 30, and 20mm and a dummy rod with a diameter of 16mm are prepared, taper processing is performed on one end of the target, and a length of the taper portion is changed in the range of 1 to 100mm and an angle of inclination (a taper angle) is changed in the range of 1 to 85 degrees in various ways.

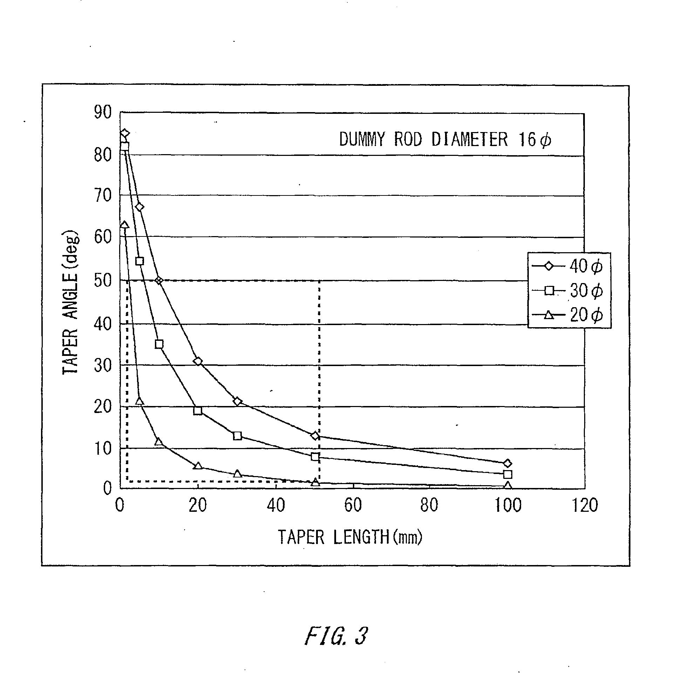

The processed target is welded to the dummy rod at the taper portion side thereof, and soot is deposited on the target to also cover the taper portion. After transparently vitrifying the obtained soot, imperfect alignment in an interface is checked in the presence or absence of spiral-shape bubbles. As a result, the imperfect alignment was not shown in an area surrounded with a dashed line shown in FIG. 3. In addition, the bulk density of the obtained soot varies between rods in the range of 0.21 to 0.25g/cm³ because this is a difference of a diameter of the target.

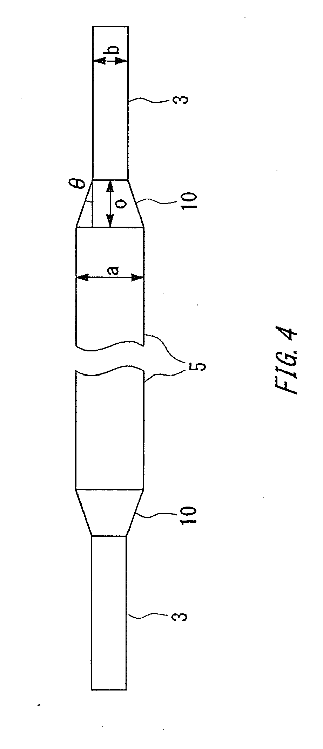

From the above-mentioned result, since it is easy to display cracks in soot if a taper angle Θ of the taper portion 10 of the target 5 exceeds 50 degrees and the effect is not obtained if the angle is less than two degrees, the taper angle Θ is set to 2 to 50 degrees (see FIG. 4).

Moreover, since an effect preventing imperfect alignment becomes small when the soot is not deposited to cover the taper portion, it is necessary to deposit the soot to wholly cover the taper portion.

In addition, when the length c of the taper portion 10 exceeds 50mm, it takes a lot of trouble over a processing, a desired effect is not obtained, and an unnecessary portion gets longer. Furthermore, when processing the target side to form the taper portion, an effective portion becoming a product of the target relatively shortens and thus the cost increases. For this reason, the length c of the taper portion 10 is set to 3 to 50mm.

In sintering, soot is simultaneously shrunk in the axial direction and diametrical direction. However, when the soot is deposited on the target, it is determined in which direction of a diametrical direction and an axial direction (a longitudinal direction) the shrinkage of soot is dominantly performed in the next transparently-vitrifying process based on how the soot is burnt and tightened. If the shrinkage in a longitudinal direction becomes dominant, since the soot is separated from the target and imperfect alignment is generated, spiral-shape bubbles are generated in the interface between the soot and the target.

Moreover, if we try to perform a transparently-vitrifying process under a fluorine atmosphere at the time of sintering and uniformly dope fluorine in glass, it is preferable that the density of soot is low. However, since the low-density soot is difficult to burn and tighten the soot for the target, the shrinkage is dominantly performed in a longitudinal direction insintering,and thus imperfect alignment arises easily.

The present invention relates to a method for setting a bulk density of soot less or equal to 0.5g/cm³ to enable uniform fluorine doping and providing a taper portion with a length of 3 to 50mm at a taper angle of 2 to 50 degrees in a dummy rod connected to a target and depositing soot on the target to cover this taper portion, in order to restrain the shrinkage in a longitudinal direction to prevent imperfect alignment and restrain the generation of spiral-shape bubbles.

### (Embodiment)

The target with a diameter of 20mm and the dummy rod with a diameter of 16mm are prepared. First, in a manufacturing process, different taperportions of several kinds of shape specifications are formed by processing one end of the target. Further, in a connecting process, after welding the target to the dummy rod at the taper portion side, optical fiber base materials of Embodiments 1 to 5 and Comparative Examples 1 and 2 are manufactured by executing a depositing process. In addition, glass particles are deposited to cover the taper portion on condition that a condition depositing the soot on the target is equal in the depositing processes of each embodiment and comparative example below. Subsequently, the target is transparently vitrified under a fluorine mixed gas atmosphere.

The evaluation of the optical fiber base material obtained in each embodiment and comparative example is performed in an interfacial state, in other words, in a state of imperfect alignment (the presence or absence of spiral-shape bubbles) during transparently vitrifying. The specification and evaluation result of each embodiment and comparative example are shown in the following Table 1.

**TABLE 1**

| | TARGET DIAMETER (mn) | DUMMY DIAMETER (mm) | TAPER LENGTH (mm) | TAPER ANGLE (deg) | INTERFACIAL STATE |
|---|---|---|---|---|---|
| EMBODIMENT 1 | 20 | 16 | 5 | 21.80 | GOOD |
| 2 | 20 | 16 | 10 | 11.31 | GOOD |
| 3 | 20 | 16 | 20 | 5.71 | GOOD |
| 4 | 20 | 16 | 30 | 3.81 | GOOD |
| 5 | 20 | 16 | 50 | 2.29 | GOOD |
| COMPARATIVE EXAMPLE 1 | 20 | 16 | 1 | 63.43 | GOOD (RASH OF CRACK) |
| 2 | 20 | 16 | 100 | 1.15 | IMPERFECT ALIGNMENT |

As shown in Table 1, an interfacial state of Embodiments 1 to 5 is good, and the spiral-shape bubbles by imperfect alignment are not shown. On the other hand, in the case of Comparative Example 1, a crack occurs frequently in soot deposition and a soot breaking trouble occurs sometimes. However, imperfect alignment does not occur at the time of sintering and the interfacial state is good if the soot is skillfully deposited. Moreover, in the case of Comparative Example 2, there is a case that an angle of inclination of the taper portion is small and imperfect alignment arises.

### INDUSTRIAL APPLICABILITY

Since a defective fraction by the generation of a soot breaking trouble and a spiral-shape bubble decreases, it contributes to the reduction of manufacturing cost of an optical fiber base material.

## Claims

1. A method for manufacturing an optical fiber base material, comprising:
connecting a dummy rod to an end of a target formed of a quartz glass rod to form a rod with dummy, the target becoming the optical fiber base material by depositing thereon glass particles;
processing the dummy rod to forma taper portion that becomes narrow in a connecting portion between the dummy road and the target as a diameter of the dummy rod departs from the target; and
depositing glass particles on an outer circumference of the glass rod with dummy after the processing the dummy rod so as to cover the outer circumference of a large diameter side of the taper portion and forming soot.

2. The method for manufacturing an optical fiber base material as claimed in claim 1, wherein the depositing glass particles is executed by an outside vapor deposition method.

3. The method for manufacturing an optical fiber base material as claimed in claim 1 or 2, wherein an angle of inclination of the taper portion is 2 to 50 degrees.

4. The method for manufacturing an optical fiber base material as claimed in any one of claims 1 to 3, wherein a length of the taper portion is 3 to 50mm.

5. The method for manufacturing an optical fiber base material as claimed in any one of claims 1 to 4, wherein a bulk density of the soot is not more than 0.5g/cm³.

6. The method for manufacturing an optical fiber base material as claimed in any one of claims 1 to 5, wherein the optical fiber base material is a fluorine-doped optical fiber base material.

7. An optical fiber base material made by being manufactured by means of the manufacturing method as claimed in any one of claims 1 to 5.

8. The optical fiber base material as claimed in claim 7, wherein the optical fiber base material is a fluorine-dopedoptical fiber base material.
